# EUROPEAN PATENT SPECIFICATION

(11) **EP 2 952 128 B1**
(45) Date of publication and mention of the grant of the patent: **07.04.2021**
(21) Application number: 13723527.1
(22) Date of filing: 01.02.2013
(51) Int. Cl.: A47K 3/40, B29C 44/02, B29C 33/56, B29K 75/00

(54) **ERGONOMIC FOAM SHOWER TRAY AND METHOD FOR MANUFACTURING SAME**
ERGONOMISCHE SCHAUMDUSCHWANNE UND VERFAHREN ZUR HERSTELLUNG DAVON
BAC À DOUCHE ERGONOMIQUE EN MOUSSE ET PROCÉDÉ DE FABRICATION DE CELUI-CI

(43) Date of publication of application: 09.12.2015
(73) Proprietor: Solid Soft Tray, S.L., 46022 Valencia (ES)
(72) Inventor: ANDRÉS ALEMANY, Javier, E-12200 Onda (Castellon) (ES)
(74) Representative: Carpintero Lopez, Francisco
(86) International application number: PCT/ES2013/070056
(87) International publication number: WO 2014/118398

(56) References cited:
- EP-A1- 0 965 611
- DE-A1-102009 043 859
- DE-U1-202006 019 814
- US-A- 6 003 169
- US-A1- 2002 001 722
- US-A1- 2013 025 044

## Description

### TECHNICAL FIELD OF THE INVENTION

The present invention is related to an ergonomic : foam shower tray and to the manufacturing method of the same; wherein the foam shower tray and the manufacturing method fall in the field of bathrooms and toilets and, preferably, of domestic bathrooms.

This manufacturing method has as purpose the obtainment of an ergonomically designed shower tray, and the production of which includes a series of small steps, without having to carry out a pre-mixture of materials for subsequent injection into a mould, and suitable for arrangement on flat surfaces of houses or public bathrooms.

### BACKGROUND OF THE INVENTION

By way of introduction, the currently used shower moulds are, preferably, made of ceramic material, acrylic or stainless steel; i.e., these are rigid materials that are attached on-site on a support or framework by means of a mortar-type bonding material, plaster or other adhesive paste.

Such trays have various disadvantages from the fragility against impacts, pronounced in ceramic material, to the difficulty of forming varied geometries because of the difficulty of machinability of such materials, since they are normally very abrasive and, therefore, increasing the machining cost of the shower tray to be manufactured.

For this reason, to solve said problem, different applications are known wherein the possibility of forming and manufacturing shower trays with different materials is considered, see for example the Spanish patent with publication number 2329641, which describes the manufacturing method of a shower tray, which is manufactured by molding with a flexible material that must necessarily be embodied in reduced thickness to suit the work floor and wherein said work floor must necessarily comprise a certain concavity or fall, previously built, towards an interior point wherein a drainage channel is placed, and therefore a flexible shower tray is obtained since it is made of flexible materials, but that needs a tilt towards the drain on the support or work floor, increasing the time of construction of the support and, therefore, requiring more expensive and complicated facilities.

Furthermore, the German patent application DE102009043859 A1 describes a foam shower base element comprising a drain, wherein the drain comprises an outlet bowl with a bowl base and an odor trap formed by a vertical flow undulation, and wherein a drain line runs from the outlet bowl to an edge of the shower base element.

For this reason, in view of the difficulties referred to above, there is the need for the emergence of a new shower tray and forming method of the same which allows its placement on surfaces or supports without previously building slopes, falls or any concavity on said surfaces or supports towards a drainage point, that additionally provides it with a suitable degree of elasticity so that it adapts to the footprint of the user, as well as requiring a small number of stages in its manufacture which directly results in a reduced manufacture cost of said product.

### DESCRIPTION OF THE INVENTION

The present invention is related to an ergonomic foam shower tray according to claim 1, and to the manufacturing and forming method thereof according to claim 7.

The existence of two different areas on the top surface of the ergonomic shower tray object of invention is highlighted, the drainage area of the shower tray, wherein it is defined at least one slope suitable for forcing the evacuation of water located on the shower tray and the flat area defined by the perimeter area suitable to be able to attach a screen or similar and the flat area adjacent to the drainage area.

In relation to the type of material and to the cavities that form part of the shower tray, it is observed that such cavities allow to give elasticity to the shower tray object of invention, in such a way that said shower tray fits the footprint of the user when they are placed over the tray, improving the ergonomics of the product and, in this way, it improves the grip of said user on the shower tray, such that it increases the friction between foot and shower tray improving the security perceived by the user.

It is observed that the shower tray comprises a base surface, which may comprise different geometries based on the geometry of the support on which it will be installed, but that said base surface is flat, therefore masonry or expensive or complicated facilities are not required to manufacture the support, but it is the shower tray itself the one that comprises said at least one slope located on the surface where the user is located, i.e., in the drainage area of the top surface opposite to said flat base surface; and wherein said slope falls towards said at least one drainage channel to remove the water from the area of the shower tray in a gravitational way.

This solution results in the shower tray comprising a thickness greater than the average thickness of shower trays, since the slope must be such that it allows a proper evacuation of the water from the shower through said at least one drain, but where the thickness increase compensates for the cost of having to manufacture the slopes in the own support, and reducing the workload of the masons responsible for its manufacturing and forming. Such thicknesses are comprised in the range defined between 2 cm and 3 cm with a tolerance of +/-0.25 cm; then they differ from the usual thicknesses of the currently known shower trays, such and as described with the aim of ensuring the proper evacuation of water and providing the shower tray with an elasticity ergonomic for the user.

Said at least one slope comprises a gradient in the drainage area comprised in the range defined between 0.5% and 2% gradient, ensuring the proper evacuation of the water from the shower towards said at least one drain.

The top surface of the shower tray comprises two areas:
- A wet area defined by the drainage area comprising said at least one slope and part of the perimeter flat surfaces suitable for the placement of a screen or similar; i.e., the area wherein the user showers and that logically comprises the area of the slopes as well as part of the perimeter flat surfaces where the possibility of placing the screen or partition is considered; and
- a drying area defined by the remaining flat surface of said top surface of the shower tray, which is located preferably in the area opposite to the drainage channel and helps the user enter and exit the shower, since it comprises the flat area adjacent to the drainage area and part of the perimeter flat surfaces.

It is considered the possibility that the drainage area or wet area of the top surface of the shower tray comprises a rectangular shape with a longest side comprised between 110 cm and 150 cm.

Equally, it is considered the possibility that the drainage channel is displaced with respect to the geometric centre of the shower tray, regardless of the shape that the drainage area or wet area of said shower tray has.

Moreover, since the shower tray is provided with elasticity, it comprises a plate on the flat base surface, aligned in correspondence with the drainage channel of the top surface, which gives consistency to said section and prevents collapses or irregularities on the base surface of the shower tray that could cause leaks, water leaks, misalignments or the like when having to thread on the underside a drain or siphon system in the shower tray.

Preferably, the material of the aforementioned plate is made of galvanized iron or with similar characteristics, of reduced thickness and at least partially embedded in the base surface of the shower tray.

As for the manufacturing method of the shower tray described above, from a mould comprising the geometry of said shower tray, such method comprises the following stages:
a) Injecting inside the mould a mixture of materials comprising polyol and isocyanate for obtaining integral polyurethane, foaming agents and polyurethane pigment;
b) waiting for a foaming and reaction time of said previous mixture of materials, until the cooling of the mixture of materials that makes up the shower tray; and
c) removing the shower tray (1) formed inside of said mould.

Stage a), shows that the mixture of materials comprises foaming agents, and therefore there is entrained air inside the shower tray which allows providing it with a degree of elasticity, capable even of being slightly deformed when the user stands on this.

Therefore, it is observed that the shower tray is manufactured as a product derived from a reaction, thus it occurs in a single step summarized in the injection of a mixture of materials already prepared, which is left to react and to cool down for the extraction of the finished part.

In relation to the arrangement of the shower tray manufactured to a particular geometry of a flat support, it is usual to have to cut the shower tray according to the geometry of said support, such that when it is cut a plurality of interior cavities corresponding to the inclusion of air inside are shown, and in order to prevent the entry of water through such cavities, the possibility of finishing the walls of the cuts with a type material, e.g. polyurethane putty and certain percentage of water is envisaged, such that the passage of water to the inside of the shower tray is prevented.

This drawback is not reflected on the top surface of the shower tray, since the injection molding manufacturing process itself and the pressure at which said mixture of materials is injected, results in the formation of a waterproof surface or skin of certain thickness (normally around 2 mm) on the surfaces of the shower tray preventing the passage of water or the formation of traces of water due to osmosis.

As for the mixture of materials, it is considered the possibility that in stage a), the mixture of materials comprises polyol and isocyanate for obtaining integral polyurethane, wherein preferably, the obtainment of integral polyurethane is carried out according to the selection of a mixing program of isocyanate and polyol at 50%.

In stage a), the mixture of materials comprises polyurethane pigments, which are added to the original mixture of materials in a preferred percentage between 2% and 5% of the total mixture of materials.

As for the stages prior to the injection of the mixture of materials described above, it is considered the possibility that prior to stage a), the method comprises the following stages:
a1) Applying mould-release agents on the inner surface of the mould that forms the geometry of the shower tray to be formed; and
a2) painting said at least one inner surface of the mould of a final colour of the shower tray to be formed.

Where, preferably, the mould-release agents comprise a mixture of diluted silicone and semi-transparent wax, the application of which is carried out by means of projection spray gun on the, at least one, inner surface that forms the external geometry of the shower tray.

Complementary, after stage c), the method comprises the following stages:
c1) deburring the burrs present in the shower tray formed; and
c2) cleaning the mould-release agents from the surface of the shower tray formed.

Once the shower tray is clean, the shower tray is protected by means of a film, and a quality control is performed over said shower tray.

Subsequently, it is considered the possibility of selecting the grill of the drain to be installed, and the corresponding coupling means of it to the shower tray formed.

Additionally, and in relation to the adaptation of the geometry of the shower tray to the geometry of the flat support on which it is placed, it is considered the possibility that after stage c), the method comprises the following stages:
d) Cutting the shower tray formed according to the measures of a support on which it is going to be placed; and
e) finishing the cut surfaces with a waterproof material.
Finally, it is considered the possibility of applying a series of treatments to the shower tray made, such that after stage c), the method comprises:
   - the application of an anti-bacterial treatment based on silver ions, and/or
   - the application of anti-skid treatment based on anti-slipping polyurethane.

Thus, in accordance with the described invention, the ergonomic shower tray and the forming method of the same constitute a significant innovation in shower trays forming methods and visual appearance of these, since it allows installing said shower tray in any kind of flat support and preferably level, on the support itself, flush or even raised arranged on a stand, without having to previously make inclined planes or recesses in the own support, having a degree of elasticity that improves the ergonomics of the formed product as well as having a small number of stages in the forming of said shower tray.

### DESCRIPTION OF THE DRAWINGS

To complement the description that is being made and in order to help a better understanding of the features of the invention, in accordance with a preferred example of practical embodiment of the same, a series of figures are attached as an integral part of said description wherein with illustrative character and without limitation, the following has been represented:
Figure 1.- It shows an elevational schematic view of the foam shower tray object of invention with two cross sections, a first section A-B and a second section C-D.
Figure 2.- It shows a schematic view of the cross-section area A-B shown in figure 1.
Figure 3.- It shows a schematic view of the cross-section area C-D shown in figure 1.
Figure 4.- It shows a perspective view of the foam shower tray with the corresponding drain.

### PREFERRED EMBODIMENT OF THE INVENTION

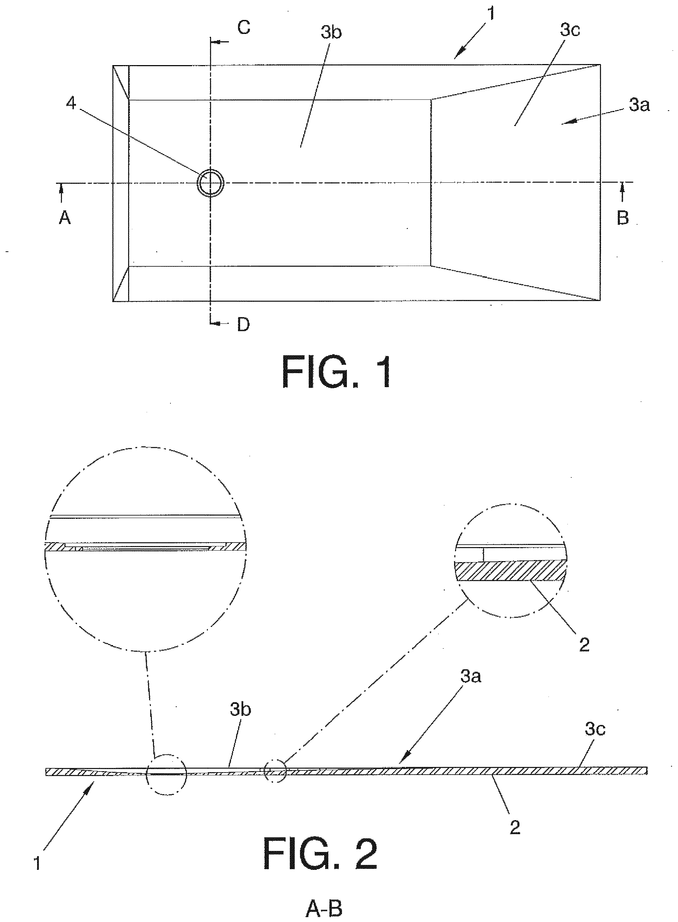

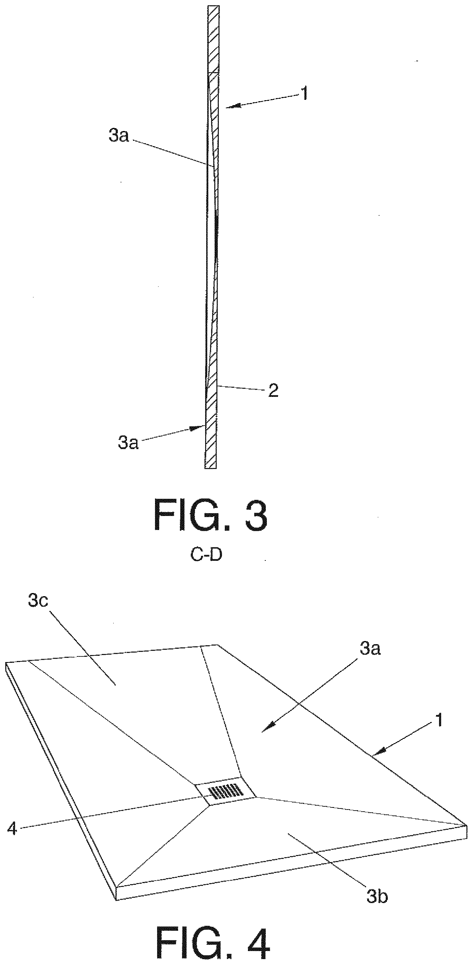

As shown in figures 1 to 4, the ergonomic foam shower tray (1) described by the invention comprises:
- A flat base surface (2) suitable to be placed on a flat surface or support; and
- a series of slopes (3) located on the top surface (3a) opposite to said flat base surface (2); wherein said slopes (3) fall into a drainage channel (4) shown in figures 1 and 4, in which there are two different areas, almost imperceptible for the user, having the following particularities:
   - A drying area in an area (3c) adjacent to a drainage area (3b) of the shower tray (1), and defined by a series of perimeter flat surfaces suitable for the placement of a screen or similar, as well as a flat surface of less surface than the drainage area (3b) and suitable for the user to enter or exit the shower as such; and
   - a drainage area (3b) or wet area around the drainage channel (4) and defined by the slopes (3) falling into the drainage channel (4) and the remaining perimeter flat surfaces.

The drainage area (3b) or wet area of the top surface (3a) of the shower tray (1) comprises a rectangular shape, in which the drainage channel is displaced with respect to the geometrical centre of the shower tray (1).

In relation to the manufacturing method of the foam shower tray (1) described above, it starts from a mould comprising the geometry of said shower tray (1), and the manufacturing method comprises the following stages:
a) Applying mould-release agents on the inner surface of the mould that forms the geometry of the shower tray (1) to be formed;
b) painting the inner surface of the mould of a final colour of the shower tray (1) to be formed;
c) injecting inside the mould a mixture of materials comprising: polyol and isocyanate for obtaining integral polyurethane, foaming agents and a small percentage of polyurethane pigments;
d) waiting for a foaming and reaction time of said previous mixture of materials, until the cooling of the mixture of materials that makes up the shower tray;
e) removing the shower tray (1) formed inside of said mould;
f) deburring the burrs present in the shower tray (1) formed; and
g) cleaning the mould-release agents from the surface of the shower tray (1) formed.

In the case that the geometry of the support on which the shower tray (1) is going to be placed, does not match the geometry of said shower tray (1), then the following stages are added:
h) Cutting the shower tray (1) formed according to the measures of a support on which it is going to be placed; and
i) finishing the cut surfaces with a waterproof material.

In view of this description and set of figures, the person skilled in the art could understand that the embodiments of the invention described can be combined in multiple ways within the object of the invention. The invention has been described according to some preferred embodiments of the same, but for the person skilled in the art it will be evident that multiple variations can be introduced in said preferred embodiments without exceeding the object of the claimed invention.
- Una superficie base plana (2) adecuada para situarse sobre una superficie o solera plana; y
- una serie de desniveles (3) situados en la superficie superior (3a) opuesta a dicha superficie base plana (2); donde dichos desniveles (3) caen hacia un conducto de desagüe (4) mostrado en las figuras 1 y 4, en las que existen dos zonas diferenciadas, practicamente imperceptibles para el usuario, que presentan las siguientes particularidades:
   - Una zona de secado en una zona adyacente (3c) a una zona de desagüe (3b) del plato de ducha (1), y definida por una serie de superficies planas perimetrales aptas para la colocación de una mampara o similar, así como una superficie plana de menor superficie que la zona de desagüe (3b) y adecuada para que el usuario entre o salga de la ducha como tal; y
   - una zona de desagüe (3b) o zona húmeda alrededor del conducto de desagüe (4) y definida por los desniveles (3) que caen hacia el conducto de desagüe (4) y las superficies planas perimetrales restantes.

La zona de desagüe (3b) o zona húmeda de la superficie superior (3a) del plato de ducha (1) comprende una forma rectangular, en que el conducto de desagüe se encuentra desplazado respecto del centro geométrico del plato de ducha (1).

En relación al procedimiento de fabricación del plato de ducha (1) espumado descrito anteriormente, se parte de un molde que comprende la geometría de dicho plato de ducha (1), y el procedimiento de fabricación comprende las siguientes etapas:
a) Aplicar agentes desmoldeantes sobre la superficie interior del molde que conforma la geometría del plato de ducha (1) a conformar;
b) pintar la superficie interior del molde de un color final del plato de ducha (1) a conformar;
c) inyectar en el interior del molde una mezcla de materiales que comprende: poliol e isocianato para obtener poliuretano integral, agentes espumantes y un pequeño porcentaje de pigmentos de poliuretano;
d) esperar un tiempo de espumado y reacción de dicha mezcla de materiales anterior, hasta el enfriamiento de la mezcla de materiales que conforma el plato de ducha;
e) extraer el plato de ducha (1) conformado en el interior de dicho molde;
f) desbarbar las rebabas existentes en el plato de ducha (1) conformado; y
g) limpiar los agentes desmoldeantes existentes en la superficie del plato de ducha (1) conformado.

En el caso de que la geometría de la solera donde se va a ubicar el plato de ducha (1), no corresponda con la geometría de dicho plato de ducha (1), entonces se añaden las etapas:
h) Cortar el plato de ducha (1) conformado de acuerdo a las medidas de una solera donde se va a ubicar; y
i) rematar las superficies cortadas con un material impermeable.

A la vista de esta descripción y juego de figuras, el experto en la materia podrá entender que las realizaciones de la invención que se han descrito pueden ser combinadas de multiples maneras dentro del objeto de la invención. La invención ha sido descrita según algunas realizaciones preferentes de la misma, pero para el experto en la materia resultará evidente que multiples variaciones pueden ser introducidas en dichas realizaciones preferentes sin exceder el objeto de la invención reivindicada.

## Claims

1. Ergonomic foam shower tray (1), comprising:
a flat base surface (2);
a top surface (3a) opposite to said flat base surface (2), comprising on its perimeter area, flat surfaces suitable for the placement of a screen or similar, at least one drainage channel (4) and a drainage area (3b) around said drainage channel (4) comprising at least one slope (3);
wherein the slope (3) of said drainage area (3b) comprises a gradient comprised in the range defined between 0.5% and 2% gradient, falling into the at least one drainage channel (4),
and wherein the thickness of the shower tray is comprised in the range defined between 1.75 cm and 3 cm, and wherein the material of said shower tray (1) comprises integral polyurethane defining a plurality of cavities internal to the shower tray (1), providing it with elasticity such that the tray is adaptable to the footprint of a user,
**characterized in that** the foam shower tray (1) further comprises:
a drying area in an area (3c) adjacent to the drainage area (3b) of the shower tray (1), said adjacent area (3c) being defined by a series of perimeter flat surfaces suitable for the placement of a screen or similar, as well as a flat surface of less surface than the drainage area (3b) and suitable for the user to enter or exit the shower as such; and
a plate on the flat base surface (2), aligned in correspondence with the drainage channel (4) of the top surface (3a) enabled to thread on the underside a drain or siphon system.

2. Ergonomic foam shower tray (1), according to claim 1, **characterized in that** the top surface (3a) comprises a waterproof surface or skin with a thickness around 2 mm, preventing the passage of water or the formation of traces of water due to osmosis.

3. Ergonomic foam shower tray (1), according to any of the previous claims, **characterized in that** the drainage area (3b) has a rectangular shape with a longest side comprised between 110 cm and 150 cm.

4. Ergonomic foam shower tray (1), according to claim 3, **characterized in that** the drainage channel (4) is displaced with respect to the geometrical centre of the shower tray (1).

5. Ergonomic foam shower tray (1), according to any of the previous claims, **characterized in that** the top surface (3a) of the shower tray (1) comprises two areas:
a wet area defined by the drainage area (3b) comprising said at least one slope (3) and part of the perimeter flat surfaces suitable for the placement of a screen or similar; and
a drying area defined by the remaining flat surface of said top surface (3a) of the shower tray (1).

6. Ergonomic foam shower tray (1), according to claim 1, **characterized in that** the plate is made of galvanized iron, it has a reduced thickness, and it is housed at least partially embedded in the flat base surface (2).

7. Manufacturing method of the ergonomic foam shower tray (1) defined in any of the previous claims, **characterized in that**, from a mould comprising the geometry of said shower tray (1), it comprises the following stages:
a) injecting inside the mould a mixture of materials comprising polyol and isocyanate for obtaining integral polyurethane, foaming agents and polyurethane pigment;
b) waiting for a foaming and reaction time of said previous mixture of materials, until the cooling of the mixture of materials that makes up the shower tray; and
c) removing the shower tray (1) formed inside of said mould,
wherein the percentage of polyurethane pigment is comprised in the range defined between 2% and 5% of the mixture of materials,
wherein prior to stage a) the method further comprises the following stages:
a1) applying mould-release agents on the inner surface of the mould that forms the geometry of the shower tray (1) to be formed; and
a2) painting said at least one inner surface of the mould of a final colour of the shower tray (1) to be formed, and
wherein after stage c), the method comprises the following stages:
c1) deburring the burrs present in the shower tray (1) formed; and
c2) cleaning the mould-release agents from the surface of the shower tray (1) formed.

8. Manufacturing method of an ergonomic foam shower tray (1), according to claim 7, **characterized in that** after stage c), the method comprises the following stages:
d) cutting the shower tray (1) formed according to the measures of a support on which it is going to be placed; and
e) finishing the cut surfaces with a waterproof material.

9. Manufacturing method of an ergonomic foam shower tray (1), according to claim 8, **characterized in that** the waterproof material is a mixture of polyurethane putty and water.

10. Manufacturing method of an ergonomic foam shower tray (1), according to any of claims 7 to 9, **characterized in that** after stage c), the method comprises applying an anti-bacterial treatment based on silver ions.

11. Manufacturing method of an ergonomic foam shower tray (1), according to claim 7, **characterized in that** after stage c2), the method comprises applying an anti-bacterial treatment based on silver ions.

## Patentansprüche

1. Ergonomische Schaumstoff-Duschwanne (1), umfassend:
eine flache Basisfläche (2);
eine obere Fläche (3a), die der flachen Basisfläche (2) gegenüberliegt und an ihrem Umfangsbereich flache Oberflächen aufweist, die für die Anbringung einer Abschirmung oder dergleichen geeignet sind, mindestens einen Entwässerungskanal (4) und einen Entwässerungsbereich (3b) um den Entwässerungskanal (4) herum, der mindestens eine Schräge (3) aufweist;
wobei die Schräge (3) des Entwässerungsbereichs (3b) eine Neigung aufweist, die in dem zwischen 0,5 % und 2 % Neigung definierten Bereich liegt und in den mindestens einen Entwässerungskanal (4) abfällt,
und wobei die Dicke der Duschwanne in dem Bereich liegt, der zwischen 1,75 cm und 3 cm definiert ist, und wobei das Material der Duschwanne (1) integrales Polyurethan umfasst, das eine Vielzahl von Hohlräumen im Inneren der Duschwanne (1) definiert, die ihr eine Elastizität verleihen, so dass die Wanne an den Fußabdruck eines Benutzers anpassbar ist,
**dadurch gekennzeichnet, dass** die Schaumstoff-Duschwanne (1) ferner umfasst: einen Trocknungsbereich in einem Bereich (3c), der an den Entwässerungsbereich (3b) der Duschwanne (1) angrenzt, wobei der angrenzende Bereich (3c) sowohl durch eine Reihe von flachen Umfangsflächen definiert ist, die für die Platzierung einer Abschirmung oder dergleichen geeignet sind, als auch durch eine flache Fläche mit geringerer Oberfläche als der Entwässerungsbereich (3b) und geeignet für den Benutzer, um die Dusche als solche zu betreten oder zu verlassen; und eine Platte auf der flachen Basisfläche (2), die in Übereinstimmung mit dem Entwässerungskanal (4) der oberen Fläche (3a) ausgerichtet ist und es ermöglicht, auf der Unterseite ein Abfluss- oder Siphonsystem einzufädeln.

2. Ergonomische Schaumstoff-Duschwanne (1) nach Anspruch 1, **dadurch gekennzeichnet, dass** die obere Fläche (3a) eine wasserdichte Oberfläche oder Haut mit einer Dicke von etwa 2 mm umfasst, die den Durchgang von Wasser oder die Bildung von Wasserspuren aufgrund von Osmose verhindert.

3. Ergonomische Schaumstoff-Duschwanne (1) nach einem der vorhergehenden Ansprüche, **dadurch gekennzeichnet, dass** der Entwässerungsbereich (3b) eine rechteckige Form mit einer längsten Seite zwischen 110 cm und 150 cm aufweist.

4. Ergonomische Schaumstoff-Duschwanne (1) nach Anspruch 3, **dadurch gekennzeichnet, dass** der Entwässerungskanal (4) gegenüber dem geometrischen Zentrum der Duschwanne (1) versetzt ist.

5. Ergonomische Schaumstoff-Duschwanne (1) nach einem der vorhergehenden Ansprüche, **dadurch gekennzeichnet, dass** die obere Fläche (3a) der Duschwanne (1) zwei Bereiche umfasst: einen Nassbereich, der durch den Entwäserungsbereich (3b) definiert ist, der die mindestens eine Schräge (3) und einen Teil der flachen Umfangsflächen umfasst, die für die Anordnung einer Abschirmung oder dergleichen geeignet sind; und
einen Trocknungsbereich, der durch die verbleibende flache Oberfläche der oberen Fläche (3a) der Duschwanne (1) definiert ist.

6. Ergonomische Schaumstoff-Duschwanne (1) nach Anspruch 1, **dadurch gekennzeichnet, dass** die Platte aus verzinktem Eisen besteht, eine reduzierte Dicke aufweist und zumindest teilweise in der flachen Basisfläche (2) eingebettet ist.

7. Verfahren zur Herstellung der in einem der vorhergehenden Ansprüche definierten ergonomischen Schaumstoff-Duschwanne (1), **dadurch gekennzeichnet, dass** es ausgehend von einer Form, die die Geometrie der genannten Duschwanne (1) umfasst, die folgenden Schritte umfasst:
a) Einspritzen einer Mischung von Materialien in die Form, die Polyol und Isocyanat zur Erzielung von integralem Polyurethan, Schaumbildner und Polyurethanpigment umfasst;
b) Abwarten eines Aufschäumens und einer Reaktionszeit der obigen Materialmischung bis zum Abkühlen der Materialmischung, das die Duschwanne bildet; und
c) Entnahme der in der Form gebildeten Duschwanne (1),
wobei der Anteil des Polyurethanpigments in dem zwischen 2 % und 5 % der Materialmischung definierten Bereich enthalten ist,
wobei das Verfahren vor dem Schritt a) weiterhin die folgenden Schritte umfasst:
a1) Aufbringen von Formtrennmitteln auf die innere Oberfläche der Form, die die Geometrie der zu formenden Duschwanne (1) bildet; und
a2) Bemalen der mindestens einen Innenfläche der Form mit einer endgültigen Farbe der zu bildenden Duschwanne (1), und
wobei nach Schritt c) das Verfahren die folgenden Schritte umfasst:
c1) Entgraten der an der gebildeten Duschwanne (1) vorhandenen Grate; und
c2) Reinigen der Oberfläche der gebildeten Duschwanne (1) von den Formtrennmitteln.

8. Verfahren zur Herstellung einer ergonomischen Schaumstoff-Duschwanne (1) nach Anspruch 7, **dadurch gekennzeichnet, dass** nach dem Schritt c) das Verfahren die folgenden Schritte umfasst:
d) Zuschneiden der Duschwanne (1), die nach den Maßen eines Trägers gebildet ist, auf den sie platziert werden soll; und
e) Oberflächenbehandeln der geschnittenen Oberflächen mit einem wasserundurchlässigen Material.

9. Herstellungsverfahren einer ergonomischen Schaumstoff-Duschwanne (1) nach Anspruch 8, **dadurch gekennzeichnet, dass** das wasserundurchlässige Material eine Mischung aus Polyurethan-Kitt und Wasser ist.

10. Verfahren zur Herstellung einer ergonomischen Schaumstoff-Duschwanne (1) nach einem der Ansprüche 7 bis 9, **dadurch gekennzeichnet, dass** nach Schritt c) das Verfahren das Aufbringen einer antibakteriellen Behandlung auf Basis von Silber-Ionen umfasst.

11. Verfahren zur Herstellung einer ergonomischen Schaumstoffduschwanne (1) nach Anspruch 7, **dadurch gekennzeichnet, dass** nach Schritt c2) das Verfahren nach das Aufbringen einer antibakteriellen Behandlung auf Basis von Silber-Ionen umfasst.

## Revendications

1. Bac à douche ergonomique en mousse (1), comprenant :
une surface de base plane (2) ;
une surface supérieure (3a) opposée à ladite surface de base plane (2), comprenant sur sa zone périphérique, des surfaces planes appropriées pour la pose d'une grille ou similaire, au moins un conduit d'écoulement d'eau (4) et une zone d'écoulement d'eau (3b) autour dudit conduit d'écoulement d'eau (4) comprenant au moins une pente (3) ;
dans lequel la pente (3) de ladite zone d'écoulement d'eau (3b) comprend un gradient compris dans la plage définie entre 0,5 % et 2 % de gradient, descendant jusque dans le moins un conduit d'écoulement d'eau (4),
et dans lequel l'épaisseur du bac à douche est comprise dans la plage définie entre 1,75 cm et 3 cm, et dans lequel le matériau dudit bac à douche (1) comprend du polyuréthane intégral définissant une pluralité de cavités à l'intérieur du bac à douche (1), en lui conférant ainsi une élasticité telle que le bac peut s'adapter à l'empreinte de pied d'un utilisateur,
**caractérisé en ce que** le bac à douche en mousse (1) comprend en outre :
une zone de séchage dans une zone (3c) adjacente à la zone d'écoulement d'eau (3b) du bac à douche (1), ladite zone adjacente (3c) étant définie par une série de surfaces planes périphériques appropriées pour la pose d'une grille ou similaire, ainsi qu'une surface plane d'une surface inférieure à la zone d'écoulement d'eau (3b) et permettant à l'utilisateur d'entrer ou de sortir de la douche en tant que telle ; et
une plaque sur la surface de base plane (2), alignée en correspondance avec le canal d'écoulement d'eau (4) de la surface supérieure (3a) permettant un positionnement sur la face inférieure d'un système d'écoulement d'eau ou de siphon.

2. Bac à douche ergonomique en mousse (1) selon la revendication 1, **caractérisé en ce que** la surface supérieure (3a) comprend une surface ou une peau imperméable d'une épaisseur d'environ 2 mm, empêchant le passage de l'eau ou la formation de traces d'eau par osmose.

3. Bac à douche ergonomique en mousse (1), selon l'une quelconque des revendications précédentes, **caractérisé en ce que** la zone d'écoulement d'eau (3b) a une forme rectangulaire avec un côté le plus long compris entre 110 cm et 150 cm.

4. Bac à douche ergonomique en mousse (1) selon la revendication 3, **caractérisé en ce que** le canal d'écoulement d'eau (4) est déplacé par rapport au centre géométrique du bac à douche (1).

5. Bac à douche ergonomique en mousse (1), selon l'une quelconque des revendications précédentes, **caractérisé en ce que** la surface supérieure (3a) du bac à douche (1) comprend deux zones :
une zone humide définie par la zone d'écoulement d'eau (3b) comprenant ladite au moins une pente (3) et une partie des surfaces planes périphériques appropriées pour la pose d'une grille ou similaire ; et
une zone de séchage définie par la surface plane restante de ladite surface supérieure (3a) du bac à douche (1).

6. Bac à douche ergonomique en mousse (1), selon la revendication 1, **caractérisé en ce que** la plaque est réalisée en fer galvanisé, elle a une épaisseur réduite, et elle est logée au moins partiellement enfouie dans la surface de base plane (2).

7. Procédé de fabrication du bac à douche ergonomique en mousse (1) selon l'une quelconque des revendications précédentes, **caractérisé en ce que**, à partir d'un moule comprenant la géométrie dudit bac à douche (1), il comprend les étapes suivantes consistant à :
a) injecter à l'intérieur du moule un mélange de matériaux comprenant du polyol et de l'isocyanate pour obtenir du polyuréthane intégral, des agents moussants et un pigment polyuréthane ;
b) attendre un temps de moussage et de réaction dudit mélange de matériaux précédent, jusqu'au refroidissement du mélange de matériaux qui constitue le bac à douche ; et
c) retirer le bac à douche (1) formé à l'intérieur dudit moule,
dans lequel le pourcentage de pigment polyuréthane est compris dans la plage définie entre 2 % et 5 % du mélange de matériaux,
dans lequel, avant l'étape a), le procédé comprend en outre les étapes suivantes consistant à :
a1) appliquer des agents de démoulage sur la surface intérieure du moule qui forme la géométrie du bac à douche (1) à former ; et
a2) peindre ladite au moins une surface intérieure du moule d'une couleur finale du bac à douche (1) à former, et
dans lequel après l'étape c), le procédé comprend les étapes suivantes consistant à :
c1) ébavurer les bavures présentes dans le bac à douche (1) formé ; et
c2) nettoyer les agents de démoulage à partir de la surface du bac à douche (1) formé.

8. Procédé de fabrication d'un bac à douche ergonomique en mousse (1), selon la revendication 7, **caractérisé en ce qu'**après l'étape c), le procédé comprend les étapes suivantes consistant à :
d) découper le bac à douche (1) formé selon les mesures d'un support sur lequel il va être placé ; et
e) procéder à une finition des surfaces découpées avec un matériau imperméable.

9. Procédé de fabrication d'un bac à douche ergonomique en mousse (1), selon la revendication 8, **caractérisé en ce que** le matériau imperméable est un mélange de mastic de polyuréthane et d'eau.

10. Procédé de fabrication d'un bac à douche ergonomique en mousse (1), selon l'une quelconque des revendications 7 à 9, **caractérisé en ce qu'**après l'étape c), le procédé comprend une application d'un traitement antibactérien à base d'ions argent.

11. Procédé de fabrication d'un bac à douche ergonomique en mousse (1), selon la revendication 7, **caractérisé en ce qu'**après l'étape c2), le procédé comprend une application d'un traitement antibactérien à base d'ions argent.
